# EUROPÄISCHE PATENTSCHRIFT

(11) **EP 0 928 275 B1**
(45) Veröffentlichungstag und Bekanntmachung des Hinweises auf die Patenterteilung: **07.06.2000**
(21) Anmeldenummer: 97938733.9
(22) Anmeldetag: 17.09.1997
(51) Int. Cl.: B65G 35/00, B65G 35/08

(54) **KRAFTÜBERTRAGUNGSMITTEL ZUM ÜBERTRAGEN VON SCHUBKRÄFTEN**
POWER TRANSMISSION DEVICE FOR TRANSMITTING THRUSTING FORCE
DISPOSITIF DE TRANSMISSION DE FORCE DE POUSSEE

(30) Priorität: 25.09.1996 CH 233896
(43) Veröffentlichungstag der Anmeldung: 14.07.1999
(73) Patentinhaber: IPT Weinfelden AG, 8570 Weinfelden (CH)
(72) Erfinder: SIEBENMANN, Dieter, CH-8332 Russikon (CH); HONEGGER, Werner, CH-8860 Bäch (CH)
(74) Vertreter: Frei, Alexandra Sarah
(86) Internationale Anmeldenummer: CH9700345
(87) Internationale Veröffentlichungsnummer: WO9813281

(56) Entgegenhaltungen:
- EP-A- 0 152 136
- EP-A- 0 399 103
- WO-A-86/01475
- GB-A- 124 800

## Beschreibung

Die Erfindung liegt auf dem Gebiete der Vorrichtungen zur Kraftübertragung und bezieht sich auf ein Kraftübertragungsmittel zur Übertragung von Schubkräften gemäss dem Oberbegriff des unabhängigen Patentanspruchs. Das erfindungsgemässe Kraftübertragungsmittel ist einerseits für Schubbetrieb ausgelegt (das heisst auf Druck belastbar) und andererseits derart, dass es eine Kraftübertragung über eine in weiten Grenzen beliebig wählbare, also auch über eine beliebig gekrümmte Strecke ermöglicht.

Gemäss dem Stande der Technik bestehen Kraftübertragungsmittel, die auf Druck belastbar sind und auf sowohl beliebig gekrümmten als auch geradlinigen Strecken anwendbar sind, beispielsweise aus einer Reihe von in einem entsprechenden Führungskanal geführten Übertragungselementen, die kugelförmig oder hantelförmig sein können. Damit es möglich wird, diese Reihe in allen Richtungen zu krümmen, sind auch bei hantelförmigen Übertragungselementen die einander zugewandten Stirnseiten konvex geformt, wie dies auch bei Kugeln der Fall ist. Das heisst in beiden Fällen, dass die Elemente sich auch in geradliniger Ausrichtung auf einer sehr kleinen, theoretisch punktförmigen Fläche berühren, über welche Fläche die ganze Kraft übertragen wird. Dadurch ist auch eine geradlinige Reihe solcher Elemente bezüglich Knickung äusserst unstabil, sodass die Elemente in geradliniger Ausrichtung auch bei geringer Belastung durch Knickung bedingte, radiale Kräfte auf die Führungen ausüben, die zu beträchtlichen Kraftverlusten durch Reibung führen und eine entsprechend belastbare Ausführung der Führungen bedingen.

In der Publikation US-3518051 ist ein Kraftübertragungsmittel des genannten Typs beschrieben, dessen kraftübertragende Elemente Kugeln sind. Die Publikation US-3968861 beschreibt ein gattungsähnliches Kraftübertragungsmittel mit hantelförmigen Übertragungselementen. Diese haben gegeneinander gerichtete konvexe Stirnflächen und weisen zur Verringerung der Reibung an der Führung Rollen auf, die im Bereiche der Laufflächen angeordnet sind.

In den Publikationen CH-646762 (bzw. US-4397145) und CH-656683 derselben Anmelderin sind kettenförmige, auf Druck und Zug belastbare Kraftübertragungsmittel beschrieben, die durch Kugelgelenke miteinander verbundene, kugelähnliche Übertragungselemente aufweisen. Auch derartige Ketten knikken im geradlinigen Schubbetrieb sehr leicht und müssen deshalb entsprechend geführt werden.

Die Erfindung stellt sich nun die Aufgabe, ein Mittel zur Übertragung von Schubkräften über beliebig gekrümmte und geradlinige Strecken zu schaffen, welches Kraftübertragungsmittel im wesentlichen aus einer geführten Reihe von Übertragungselementen besteht, die in einem Führungskanal angeordnet ist. Das erfindungsgemässe Kraftübertragungsmittel soll gegenüber bekannten derartigen Mitteln effizienter, das heisst mit weniger Kraftverlust betreibbar sein. Trotzdem soll das Kraftübertragungsmittel auch in kleiner Ausführung einfach herstellbar und mit bekannten Antriebsmitteln wie beispielsweise Zahnräder, Schneckengetriebe oder auch hydraulischen oder pneumatischen Zylindern antreibbar sein.

Diese Aufgabe wird gelöst durch das Kraftübertragungsmittel, wie es in den Patentansprüchen definiert ist.

Das erfindungsgemässe Kraftübertragungsmittel löst die gestellte Aufgabe mit Übertragungselementen, die, wenn sie in einer geradlinigen Reihe angeordnet und auf Druck beansprucht sind, eine Art Stab bilden, der bedeutend knickresistenter ist als eine Reihe von Kugeln oder eine Reihe der oben beschriebenen, hantelförmigen Elemente mit konvexen Stirnflächen. Durch die Knickfestigkeit des genannten Stabes wird die Reibung der Elemente an der Führung auf geradlinigen Strecken auf ein Minimum beschränkt, was nicht nur die notwendige Betriebsenergie senkt, sondern auch zu betreffend Belastbarkeit und Präzision weniger aufwendigen Führungskanälen führt, die gegebenenfalls streckenweise sogar ganz entfallen können.

Das erfindungsgemässe Kraftübertragungsmittel besteht im wesentlichen aus einer Reihe von Übertragungselementen und einem Führungskanal, in dem die Elemente durch einen Antrieb bewegt werden. Dabei sind die sich berührenden Stirnflächen der Elemente derart ausgestaltet, dass die Elemente in koaxialer Ausrichtung einen knickfesten Stab bilden, das heisst mit anderen Worten, die Stirnflächen sind derart ausgestaltet,
- dass in einer geradlinig ausgerichteten Elementenreihe zwischen je zwei Elementen eine Berührungsfläche (nicht ein Berührungspunkt) vorhanden ist, wobei die Berührungsfläche nicht kugelsymmetrisch ausgebildet ist (kein Kugelgelenk), sich möglichst weit von der Elementenachse weg erstreckt und derart geformt ist, dass die Resultierende der übertragenen Kraft auf der Achse jedes Elementes liegt (Bildung eines knickstabilen Elementenstabes);
- dass vorteilhafterweise eine auf eine geradlinige Elementenreihe wirkende Kraft vor allem in radial aussen liegenden Bereichen der Stirnflächen von einem Element auf das benachbarte Element übertragen wird (weitere Stabilisierung des knickstabilen Elementenstabes),
- dass die Elemente beim Zusammenführen gegenseitig zentriert und in einer koaxialen Position gehalten werden (Verhinderung von exzentrischer, knickfördernder Kraftübertragung),
- dass bei einer Auslenkung der Elemente aus einer geradlinigen Reihe die Elemente geführt gegeneinander verschwenkt werden (Erhaltung der zentrierten Anordnung) und
- dass vorteilhafterweise auch in einer gekrümmten Reihe die Kraftübertragung von einem Element auf das nächste nicht nur über einen Berührungspunkt übertragen wird.

Von den zwei gegeneinander gewandten Stirnflächen zweier benachbarter Elemente in der Elementenreihe des erfindungsgemässen Kraftübertragungsmittels weist die eine einen radial aussen angeordneten, ringartigen Kamm, die andere eine entsprechende ringartige Nut oder mindestens halbe Nut auf, wobei Kamm und Nut einen aufeinander abgestimmten mindestens im obersten Bereiche des Kammes bzw. im Nutgrund kreisbogenförmigen Querschnitt aufweisen (Kamm: konvexer Bogen; Nut: konkaver Bogen), derart, dass Nut und Kamm bei koaxialer Anordnung der beiden Elemente ineinander liegen und eine Berührungsfläche bilden, und derart, dass bei einer Verschwenkung der Elemente aus einer koaxialen Position diese Verschwenkung dadurch, dass der Kamm in der Nut verschwenkt wird, geführt abläuft.

Sind die ringartigen, aufeinander abgestimmten Nuten und Kämme kreisförmig, sind Verschwenkungen der Übertragungselemente gegeneinander in beliebigen Richtungen möglich. Dabei reduziert sich die Berührungsfläche der beiden Elemente, die bei koaxialer Anordnung durch mindestens einen Teil der Nut- bzw. Kammoberflächen gebildet wird, bei einer Verschwenkung auf eine Berührungslinie, die quer zu Nut und Kamm verläuft. Haben die ringartigen Nuten und Kämme die Form von Polygonen, sind die Verschwenkunsrichtungen im wesentlichen auf Richtungen quer zu den Polygonseiten beschränkt, wobei in der verschwenkten Position eine Berührungsfläche zwischen Nut und Kamm im Bereiche der einen, senkrecht zur Schwenkrichtung stehenden Polygonseite erhalten bleibt.

Vorteilhafterweise sind Nut und Kamm und/oder das Zentrum der Stirnflächen derart ausgebildete dass die Stirnflächen zweier koaxial aneinander geschobener Übertragungselemente sich im Zentrum nicht berühren, das heisst, dass keine Kraft über das Zentrum übertragen wird.

Die Nut-und-Kamm-Form der Stirnflächen wirkt zentrierend. Die Übertragungselemente sind beliebig (kreisförmige Nut und Kamm) oder in vorgegebenem Masse beschränkt (polygonförmige Nut und Kamm) gegeneinander verschwenkbar und trotzdem wird die Kraft in einer geradlinigen Reihe von Übertragungselementen über eine entsprechend ausgeformte Berührungsfläche übertragen, so dass die Reihe wie ein Stab wirkt, das heisst eine beträchtliche Knickfestigkeit zeigt. Durch die Verschiebung der Last auf aussenliegende Bereiche der Stirnflächen wird die Knickfestigkeit noch erhöht. Durch die kreisbogenförmige Ausgestaltung des obersten Bereiches des Kammquerschnitts und des Nutgrundquerschnitts wird eine geführte Schwenkbewegung zweier benachbarter Elemente ermöglicht, wodurch die Elemente zentriert bleiben, und wodurch der Berührungsbereich in verschwenktem Zustand auf einen mindestens linienförmigen Bereich vergrössert wird gegenüber einem theoretisch punktförmigen Berührungsbereich zwischen zwei Kugeln oder konvexen Stirnflächen.

Die Führungskanäle des erfindungsgemässen Kraftübertragungsmittels dienen in gekrümmten Bereichen weiterhin als kraftaufnehmende Führungen, in geradlinigen Bereichen aber lediglich als Gefängnis für die Übertragungselemente und gegebenenfalls zur Aufnahme von durch äussere Belastung des Kraftübertragungsmittels bedingte, radiale Kräfte. Da die Elementenreihe des erfindungsgemässen Kraftübertragungsmittels auf geradlinigen Bereichen wie ein auf Druck belasteter Stab wirkt, fällt eine Führungsfunktion des Kanals in derartigen Bereichen weitgehend weg und kann der Kanal entsprechend ausgestaltet werden.

Die Elemente des erfindungsgemässen Kraftübertragungsmittels können je nach Anwendung vollständig unabhängig voneinander sein oder sie können miteinander verbunden sein. Entsprechende Verbindungsmittel sind derart flexibel auszugestalten, dass jede erwünschte gegenseitige Verschwenkung der Elemente gegeneinander möglich ist. Die Verbindungsmittel können gleichzeitig eine zusätzliche, zentrierende Funktion übernehmen und/oder eine rücktreibende Funktion, das heisst derart ausgestaltet sein, dass sie die Reihe der Elemente in eine koaxiale Ausrichtung zurücktreiben.

Einige beispielhafte Ausführungsformen des erfindungsgemässen Kraftübertragungsmittels werden anhand der folgenden Figuren mehr im Detail beschrieben. Dabei zeigen:
- **Figur 1**: eine beispielhafte Ausführungsform des erfindungsgemässen Kraftübertragungsmittels, teilweise parallel zur Achse des Führungskanals geschnitten;
- **Figur 2**: einen vergrösserten Längsschnitt des Berührungsbereiches zwischen zwei benachbarten Übertragungselementen eines erfindungsgemässen Kraftübertragungsmittels, die koaxial ausgerichtet (ausgezogen) oder relativ zueinander verschwenkt (strichpunktiert) dargestellt sind;
- **Figuren 3 und 4**: zwei beispielhafte Anwendungen des erfindungsgemässen Kraftübertragungsmittels;
- **Figur 5**: ein Querschnitt durch ein erfindungsgemässes Kraftübertragungsmittel im Bereiche eines An- oder Abtriebes;
- **Figur 6**: Elemente für ein erfindungsgemässes Kraftübertragungsmittel, die polygonförmige Stirnseiten aufweisen;
- **Figuren 7 und 8**: Querschnitte durch ein erfindungsgemässes Kraftübertragungsmittel mit Elementen im wesentlichen gemäss Figur 6.

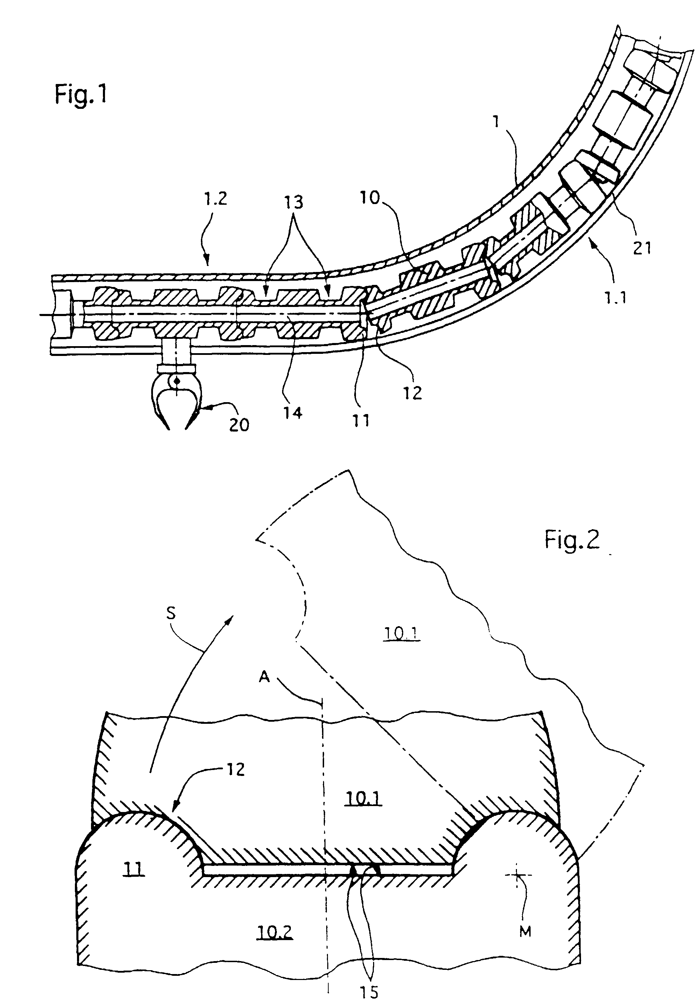

**Figur 1** zeigt einen Teil einer beispielhaften Ausführungsform des erfindungsgemässen Kraftübertragungsmittels. Dargestellt ist ein Führungskanal 1 mit einem gekrümmten und einem geradlinigen Bereich (1.1 bzw. 1.2). Der Führungskanal list entlang seiner Achse geschnitten. Im Führungskanal 1 ist eine Reihe von Übertragungselementen 10 angeordnet, die teilweise ebenfalls entlang der Achse geschnitten dargestellt sind.

Die Übertragungselemente 10 weisen, wie bereits eingangs beschrieben, je eine mit kreisrundem, ringartigem Kamm 11 versehene und eine mit entsprechender, ringartiger Nut 12 versehene Stirnfläche auf. Um eine gegenseitige Verschwenkung der Elemente um eine beliebige, senkrecht zur Elementenachse stehende Schwenkachse zu erlauben, ist die aussenliegende Wand der Nut reduziert. Selbstverständlich sind auch abwechslungsweise angeordnete Elemente mit je zwei Stirnflächen mit Nut bzw. zwei Stirnflächen mit Kamm denkbar.

Die Ausgestaltung der Übertragungselemente 10 zwischen den Stirnflächen ist nicht erfindungsrelevant. Sollen die Elemente beispielsweise mit einem Zahnrad oder ähnlichem Antriebsmittel angetrieben werden, brauchen sie eine Form, in die das Antriebsmittel eingreifen kann, beispielsweise wie dargestellt, eine oder zwei Stellen 13 mit reduziertem Durchmesser. Sollen die Elemente bei relativ grosser Länge um relativ enge Krümmungen bewegbar sein, sind sie vorteilhafterweise hantelförmig auszubilden mit möglichst kugeligen Endbereichen.

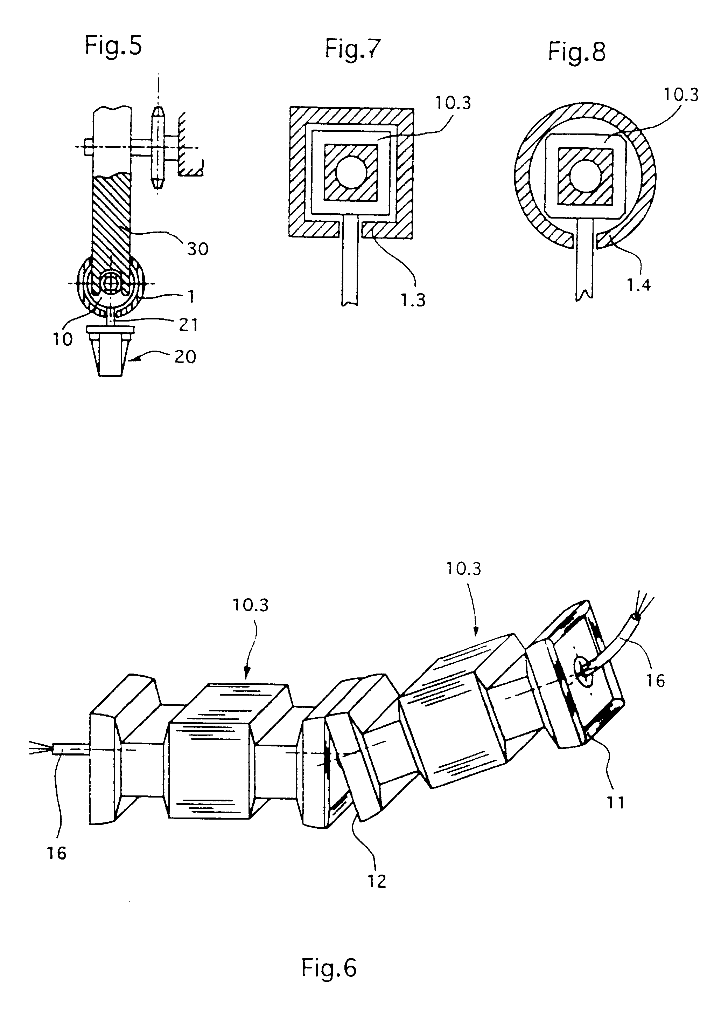

Die Elemente können eine axiale Bohrung 14 aufweisen. Dadurch wird einerseits die Kraftübertragung auf den radial aussen liegenden Bereich von Nut und Kamm verlegt und andererseits kann durch die axiale Bohrung beispielsweise ein Kabel zur Leitung von elektrischer Energie oder von elektrischen Signalen an eine bestimmte Stelle der Elementenreihe lose verlegt sein, welches Kabel zusätzlich auch die Funktion einer losen Verbindung der Übertragungselemente übernehmen kann (siehe auch Figur 6).

Als Andeutung einer beispielhaften Anwendung ist an einem der Übertragungselemente angeordnet ein Greifer 20 dargestellt, der durch eine schlitzförmige Öffnung 21 im Führungskanals 1 auf dessen Aussenseite ragt und mit dem beispielsweise Gegenstände entlang dem Führungskanal 1 bewegbar sind.

Aus der Figur 1 ist gut ersichtlich, wie die Übertragungselemente 10 da, wo sie als geradlinige Reihe angeordnet sind (links in der Figur) einen stabilen Stab bilden, dadurch dass die Elemente mindestens im Bereiche von Nut und Kamm eine entsprechend ausgeformte, gemeinsame Berührungsfläche haben und dadurch dass Nut und Kamm von benachbarten Elementen ineinander greifen und derart die Elemente zentriert halten. Aus der Figur 1 ist ebenfalls ersichtlich, dass die Elemente im Bereiche der Kanalkrümmung (1.1) an der Aussenseite des Kanals entlanggeschoben werden und dieser Teil des Kanals auch entsprechende Kräfte aufnehmen muss. Demgegenüber übernimmt der Führungskanal im geradlinigen Bereich 1.2 keine Führungsfunktion (die Elemente berühren den Führungskanal in diesem Bereich beispielsweise wie dargestellt nicht). Daraus folgt, dass vom Führungskanal bezüglich Festigkeit nur auf der Aussenseite von Krümmungen Voraussetzungen zu erfüllen sind und dass Voraussetzungen bezüglich Präzision des Innenhohlraumes des Kanals relativ zur radialen Ausdehnung der Übertragungselemente sozusagen nicht bestehen.

**Figur 2** zeigt in einem grösseren Massstab, wiederum entlang der Achse A geschnitten den Berührungsbereich zwischen zwei benachbarten Übertragungselementen 10.1 und 10.2, die den Übertragungselementen der Figur 1 im wesentlichen gleich sind. Vom Element 10.1 ist die Stirnfläche mit Nut 12, vom Element 10.2 die Stirnfläche mit Kamm 11 dargestellt. Das Element 10.1 ist ausgezogen in einer zu Element 10.2 koaxialen Position dargestellt und strichpunktiert in einer gegenüber dem Element 10.1 verschwenkten Position. Eine Schwenkbewegung, die durch den Pfeil S symbolisiert ist, wird durch den mindestens teilweise kreisbogenförmigen Querschnitt von Nut und Kamm derart geführt, dass eine definierte Schwenkachse durch den Mittelpunkt M des Kreisbogens verläuft, während Nut und Kamm miteinander in Berührung bleiben. Sind Nut und Kamm auf den Stirnflächen kreisrund, beschränkt sich diese Berührung in der verschwenkten Position theoretisch auf eine radial verlaufende Linie die zur Schwenkachse senkrecht steht und die in der Figur 2 in der Schnittebene liegt.

Die Übertragungselemente 10.1 und 10.2 der Figur 2 unterscheiden sich von den Übertragungselementen 10 gemäss Figur 1 dadurch, dass sie keine axiale Bohrung (14) aufweisen. Damit trotzdem sichergestellt ist, dass die Kraftübertragung vor allem auf die radial aussenliegenden Bereiche der Stirnflächen verschoben ist, ist vorteilhafterweise der Kamm 11 höher auszugestalten als die Nut 12 tief ist. Dadurch wird eine Berührung im zentralen Bereich 15 der Stirnflächen und eine Kraftübertragung in diesem Bereich verhindert.

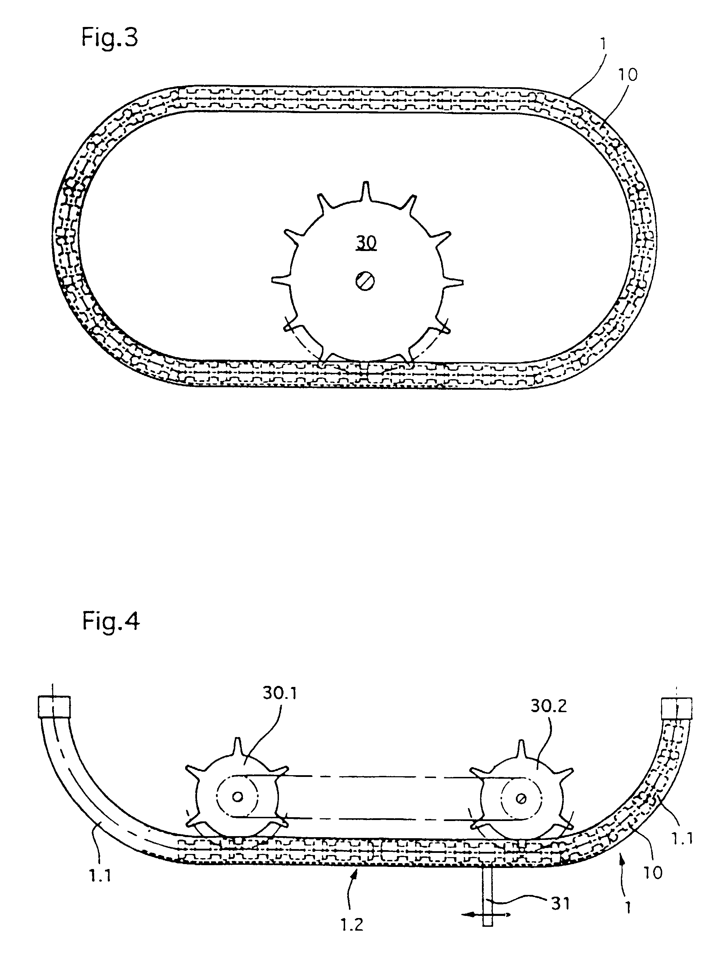

**Figur 3** zeigt eine beispielhafte Anwendung des erfindungsgemässen Kraftübertragungsmittels. Es handelt sich dabei um eine in sich geschlossene Schlaufe eines Führungskanals 1, in der so viele Übertragungselemente 10 angeordnet sind, dass sie einander berühren. Die Elemente 10 werden durch ein angetriebenes Kettenrad 30, dessen Zähne durch eine entsprechende Öffnung in den Führungskanal 1 eingreifen und mit den Übertragungselementen 10 in Eingriff bringbar sind, in der einen oder anderen Richtung im Führungskanal 1 einander schiebend bewegt. Der Führungskanal 1 kann beispielsweise eine sich über seine ganze Länge erstreckende, schlitzförmige Öffnung (21, Figur 1) aufweisen, durch die an den Elementen angeordnete Greifer nach aussen ragen (20, Figur 1) und mit deren Hilfe Gegenstände ganz oder teilweise um die Schlaufe oder hin und her über einen Teil der Schlaufe bewegbar sind.

Die Schlaufe, die der Führungskanal 1 der Figur 3 bildet, besteht aus zwei durch Kreisbogen verbundene geradlinigen Teilstücken, wobei alle Teilstücke in einer Ebene angeordnet sind. Selbstverständlich kann die Schlaufe im wesentlichen beliebige Formen annehmen und muss insbesondere nicht in einer Ebene angeordnet sein.

**Figur 4** zeigt eine weitere, beispielhafte Anwendung des erfindungsgemässen Kraftübertragungsmittels. Der in dieser Ausführungsform nicht in sich geschlossene Führungskanal 1 weist zwischen zwei gekrümmten Bereichen 1.1 einen geradlinigen Bereich 1.2 auf, in dessen Endbereichen zwei miteinander gekoppelte und mit der im Kanal angeordneten Reihe von Übertragungselementen 10 wirkverbundene Antriebsräder 30.1 und 30.2 angeordnet sind.

Das Kraftübertragungsmittel gemäss Figur 4 dient beispielsweise zur Hin- und Herförderung eines mit der Elementenreihe verbundenen Vorrichtungsteils 31 (sehr schematisch dargestellt) oder mehrerer solcher Teile. Die Gesamtlänge des Führungskanals 1 und die Länge der im Kanal angeordneten Reihe von Übertragungselementen ist derart ausgelegt, dass die Reihe sich mindestens vom einen bis zum anderen Antriebsrad (30.1 bzw. 30.2) erstreckt, wenn der Vorrichtungsteil 31 sich in einer der beiden vorgegebenen Extrempositionen befindet. Die gekrümmten Teile 1.1 des Führungskanals sind derart ausgerichtet, dass sich darin befindende Übertragungselemente 10 durch die Schwerkraft gegen den geradlinigen Teil 1.2 getrieben werden. Dabei sind die Elemente keiner Übertragungskraft ausgesetzt, das heisst mit anderen Worten, dass weder an den gekrümmten Kanalteilen noch am geradlinigen Kanalteil Reib- und Verschleisskräfte auftreten.

Offensichtlich könnte für die in der Figur 4 gezeigte Anwendung anstelle der Reihe von Übertragungselementen auch eine entsprechend angetriebene Stange zur Anwendung kommen. Funktion und Betriebseigenschaften der Stange wäre zwischen den beiden Antriebsrädern 30.1 und 30.2 genau dieselbe wie die Funktion des von den Übertragungselementen gebildeten Stabes. Der Vorteil der Anwendung des erfindungsgemässen Kraftübertragungsmittels besteht gegenüber der Stange insbesondere darin, dass durch die Krümmung der Kanalenden 1.1 insbesondere bei langen Förderstrecken bzw. grossen Hüben eine beträchtliche Raumersparnis erzielt werden kann.

**Figur 5** zeigt als Querschnitt ein in den Führungskanal 1 eingreifendes An-oder Abtriebsrad 30, das mit einem Übertragungselement 10 gemäss Figur 1 im Eingriff ist. An dem Übertragungselement 10 ist ein Greifer 20 angeordnet, der durch eine schlitzförmige Öffnung 21 aus dem Führungskanal 1 herausragt.

**Figur 6** zeigt zwei Übertragungselemente 10.3 in relativ zueinander verschwenkter Position. Im Gegensatz zu den Übertragungselementen der Figuren 1 und 2 sind insbesondere die Stirnflächen der Elemente quadratisch ausgestaltet und weisen ringartige Nut 12 bzw. Kamm 11 auf, die quadratisch sind, wobei Nut und Kamm im Querschnitt beispielsweise gleich ausgestaltet sind, wie dies in der Figur 2 dargestellt ist. Gegenüber Übertragungselementen mit kreisrunden Nuten bzw. Kämmen lassen sich diese Elemente 10.3 nur in vier senkrecht zueinander stehenden Richtungen kontrolliert gegeneinander verschwenken. Für erweiterte Schwenkmöglichkeiten sind auch sechseckige, achteckige oder allgemein polygonförmig ausgebildete Stirnflächen denkbar.

In der Figur 6 ist auch als beispielhaftes, loses Verbindungsmittel zur losen Verbindung der Übertragungselemente ein durch die axialen Bohrungen der Elemente geführtes Kabel 16 dargestellt.

Polygonförmig ausgestaltete Nuten und Kämme auf Stirnflächen von Übertragungselementen müssen nicht zwingend ganz durchgehend sein. Sie können beispielsweise an den Ecken Unterbrüche aufweisen.

**Figuren 7 und 8** zeigen Übertragungselemente 10.3 im wesentlichen gemäss Figur 6 als Querschnitt in einem Führungskanal 1.3 bzw. 1.4. Die Figuren zeigen, dass die Übertragungselemente 10.3 mit quadratisch ausgebildeter Stirnfläche sowohl in vierkantigen (1.3) als auch in runden Führungskanälen (1.4) anwendbar sind, wobei in einem Führungskanal mit rundem Querschnitt durch entsprechende Mittel vorteilhafterweise dafür gesorgt wird, dass die Elemente sich nicht gegeneinander verdrehen können.

## Patentansprüche

1. Kraftübertragungsmittel zur Übertragung von Schubkräften über geradlinige und beliebig gekrümmte Strecken, welches Kraftübertragungsmittel einen Führungskanal (1, 1.3, 1.4) und eine im Führungskanal (1, 1.3, 1.4) angeordnete Reihe von Übertragungselementen (10, 10.3), die mit einem Antrieb (30, 30.1/30.2) in Wirkverbindung bringbar ist, aufweist, wobei die Übertragungselemente (10, 10.3) im Führungskanal (1, 1.3, 1.4) im Bereiche von Stirnflächen miteinander in Berührung bringbar sind, **dadurch gekennzeichnet**, dass die Stirnflächen der Übertragungselemente je einen radial aussen angeordneten, ringartigen Kamm (11) bzw. eine ringartige Nut (12) aufweisen, dass Nut (12) und Kamm (11) von miteinander in Berührung bringbaren Stirnflächen derart aufeinander abgestimmt sind, dass sie ineinander positionierbar sind und dass Nut (12) und Kamm (11) Querschnitte aufweisen, die ineinander positioniert mindestens beschränkt gegeneinander verschwenkbar sind.

2. Kraftübertragungsmittel nach Anspruch 1, **dadurch gekennzeichnet**, dass der Querschnitt des Kammes (11) mindestens im obersten Kammbereich kreisbogenförmig ist und dass der Querschnitt der Nut (12) mindestens im Bereiche des Nutgrundes kreisbogenförmig ist.

3. Kraftübertragungsmittel nach Anspruch 1 oder 2, **dadurch gekennzeichnet**, dass der ringartige Kamm (11) bzw. die ringartige Nut (12) eine kreisrunde Form oder die Form eines Polygons aufweist.

4. Kraftübertragungsmittel nach einem der Ansprüche 1 bis 3, **dadurch gekennzeichnet**, dass die Stirnflächen der Übertragungselemente (10, 10.3) derart ausgestaltet sind, dass sie in einem zentralen Bereich nicht miteinander in Berührung bringbar sind.

5. Kraftübertragungsmittel nach einem der Ansprüche 1 bis 4, **dadurch gekennzeichnet**, dass die Übertragungselemente (10, 10.3) durch Verbindungsmittel (16) lose miteinander verbunden sind.

6. Kraftübertragungsmittel nach einem der Ansprüche 1 bis 5, **dadurch gekennzeichnet**, dass sie Übertragungselemente (10, 10.3) eine axiale Bohrung (14) aufweisen.

7. Kraftübertragungsmittel nach Anspruch 6, **dadurch gekennzeichnet**, dass das Verbindungsmittel (16) ein durch die axialen Bohrungen (14) der Übertragungselemente (10, 10.3) verlaufendes Kabel ist.

8. Kraftübertragungsmittel nach einem der Ansprüche 1 bis 7, **dadurch gekennzeichnet**, dass der Antrieb ein Kettenrad (30, 30.1/30.2) ist dessen Zähne durch eine Öffnung im Führungskanal (1, 1.3, 1.4) mit verengten Bereichen (13) der Übertragungselemente (10, 10.3) in Wirkverbindung bringbar sind.

9. Kraftübertragungsmittel nach einem der Ansprüche 1 bis 8, **dadurch gekennzeichnet,** dass der Führungskanal (1, 1.3, 1.4) ) derart angeordnet ist, dass die Übertragungselemente (10, 10.3) durch die Schwerkraft gegen den Antrieb getrieben werden.

10. Kraftübertragungsmittel nach einem der Ansprüche 1 bis 9, **dadurch gekennzeichnet,** dass der Führungskanal (1, 1.3, 1.4) eine in sich geschlossene Schlaufe bildet und dass die darin angeordnete Reihe von Übertragungselementen (10, 10.3) eine der Länge der Schlaufe entsprechende Länge aufweist.

11. Kraftübertragungsmittel nach einem der Ansprüche 1 bis 10, **dadurch gekennzeichnet**, dass der Führungskanal (1, 1.3, 1.4) nicht in sich geschlossen ist, dass zwei voneinander beabstandete Antriebe (30.1, 30.2) vorgesehen sind und dass die Reihe der im Führungskanal (1, 1.3, 1.4) angeordneten Übertragungselemente (10, 10.3) kürzer ist als der Führungskanal.

## Claims

1. Transmission means for transmitting pushing forces on straight paths and on freely selectable curved paths, the transmission means comprising a guide channel (1, 1.3, 1.4), a line of transmission members (10, 10.3) arranged in the guide channel (1, 1.3, 1.4) and a drive (30, 30.1/30.2) acting on the line of transmission members, whereby the transmission members (10, 10.3) have each two contact faces with which they contact other transmission members, **characterized**, in that the contact faces of the transmission members each comprise a ring-shaped ridge (11) arranged in a radially outer region of the face or a corresponding ring-shaped groove (12) and in that corresponding grooves (12) and ridges (11) are matched to each other for the ridge being positionable in the groove and to have cross sections for enabling the ridge (11) being positioned in the groove (12) to be at least restrictedly pivotable in relation to the groove.

2. Transmission means according to claim 1, **characterized** in that the cross section of the ridge (11) has a circular arch profile, at least in the uppermost region of the ridge, and that the cross section of the groove (12) has a circular arch profile, at least in the region of the base of the groove.

3. Transmission means according to claim 1 or 2, **characterized** in that the ring-shaped ridge (11) or the ring-shaped groove respectively have a circular form or the form of a polygon.

4. Transmission means according to one of claims 1 to 3, **characterized** in that the contact faces of the transmission members (10, 10.3) are designed such that they cannot be brought into contact in a central region.

5. Transmission means according to one of claims 1 to 4, **characterized** in that the transmission members (10, 10.3) are loosely connected to each other by means of connection means (16).

6. Transmission means according to one of claims 1 to 5, **characterized** in that the transmission members (10, 10.3) comprise an axial bore (14).

7. Transmission means according to claim 6, **characterized** in that the connection means (16) is a cable laid through the axial bores (14) of the transmission members (10, 10.3).

8. Transmission means according to one of claims 1 to 7, **characterized** in that the drive is a chain wheel (30, 30.1/30.2) with cogs engaging the transmission members (10, 10.3) in a region (13) with a reduced cross section through an opening in the guide channel (1, 1.3, 1.4).

9. Transmission means according to one of claims 1 to 8, **characterized** in that the guide channel (1, 1.3, 1.4) is arranged such that the transmission members (10, 10.3) are driven towards the drive by gravity.

10. Transmission means according to one of claims 1 to 9, **characterized** in that the guide channel (1, 1.3, 1.4) forms a loop closed in itself and that the line of transmission members (10, 10.3) arranged therein has a length corresponding to the length of the loop.

11. Transmission means according to one of claims 1 to 10, **characterized** in that the guide channel (1, 1.3, 1.4) has two ends, that two drives (30.1, 30.2) distanced from each other are provided and that the line of the transmission members arranged in the guide channel (1, 1.3, 1.4) is shorter than the guide channel.

## Revendications

1. Mécanisme de transmission d'énergie pour la transmission d'efforts de poussée sur des trajets rectilignes et courbés d'une manière quelconque, ce mécanisme de transmission d'énergie comprenant un canal de guidage (1, 1.3, 1.4) et une série d'éléments de transmission (10. 10.3) disposés dans le canal de guidage (1. 1.3, 1.4) et qui peuvent être mis en prise avec un entraînement (30, 30.1, 30.2), les éléments de transmission (10, 10.3) pouvant être mis en contact les uns avec les autres dans le canal de guidage (1, 1.3, 1.4) dans la zone de surfaces frontales, caractérisé en ce que les surfaces frontales des éléments de transmission comprennent respectivement une came en forme d'anneau faisant saillie radialement vers l'extérieur (11) ou une gorge en forme d'anneau (12), en ce que la gorge (12) et la came (11) sont ajustées de telle façon l'une par rapport à l'autre par leurs surfaces frontales en contact réciproque, de telle façon qu'elles puissent être positionnées l'une dans l'autre et en ce que la gorge (12) et la came (11) présentent des sections qui, lorsqu'elles sont positionnées l'une dans l'autre, peuvent, au moins partiellement, pivoter entre elles.

2. Mécanisme de transmission d'énergie selon la revendication 1, caractérisé en ce que la section de la came (11) est en forme d'arc de cercle, au moins dans la zone supérieure de la came, et en ce que la section de la gorge (12) est en forme d'arc de cercle, au moins dans la zone du fond de la gorge.

3. Mécanisme de transmission d'énergie selon la revendication 1 ou 2, caractérisé en ce que la came en forme d'anneau (11) ou la gorge en forme d'anneau (12) a une forme circulaire ou une forme de polygone.

4. Mécanisme de transmission d'énergie selon l'une des revendications 1 à 3, caractérisé en ce que les surfaces frontales des éléments de transmission (10, 10.3) sont configurées manière à ce qu'elles ne puissent pas être mises en contact entre elles dans une zone centrale.

5. Mécanisme de transmission d'énergie selon l'une des revendications 1 à 4, caractérisé en ce que les éléments de transmission (10, 10.3) sont reliés entre eux de manière mobile par des moyens de liaison (16).

6. Mécanisme de transmission d'énergie selon l'une des revendications 1 à 5, caractérisé en ce que les éléments de transmission (10, 10.3) comprennent un alésage axial (14).

7. Mécanisme de transmission d'énergie selon la revendication 6, caractérisé en ce que le moyen de liaison (16) est un câble traversant les alésages axiaux (14) des éléments de transmission (10, 10.3).

8. Mécanisme de transmission d'énergie selon l'une des revendications 1 à 7, caractérisé en ce que l'entraînement est une roue dentée (30, 30.1/30.2) dont les dents peuvent être mises en prise avec des zones rétrécies (13) des éléments de transmission (10, 10.3) à travers une ouverture dans le canal de guidage (1, 1.3, 1.4).

9. Mécanisme de transmission d'énergie selon l'une des revendications 1 à 8, caractérisé en ce que le canal de guidage (1, 1.3, 1.4) est disposé de telle façon que les éléments de transmission (10, 10.3) sont repoussés contre l'entraînement par la force de gravité.

10. Mécanisme de transmission d'énergie selon l'une des revendications 1 à 9, caractérisé en ce que le canal de guidage (1, 1.3, 1.4) forme une boucle refermée sur elle-même et en ce que la série d'éléments de transmission (10, 10.3) qui est disposée à l'intérieur de cette boucle a une longueur qui correspond à la longueur de la boucle.

11. Mécanisme de transmission d'énergie selon l'une des revendications 1 à 10, caractérisé en ce que le canal de guidage (1, 1.3, 1.4) n'est pas refermé sur lui-même, en ce que deux roues d'entraînement espacées entre elles (30.1, 30.2) sont prévues et que la série d'éléments de transmission (10, 10.3) disposée dans le canal de guidage (1, 1.3, 1.4) est plus courte que le canal de guidage.
